# EUROPEAN PATENT APPLICATION

(11) **EP 4 356 871 A1**
(43) Date of publication of application: **24.04.2024**
(21) Application number: 22203105.6
(22) Date of filing: 21.10.2022
(51) Int. Cl.: A61C 19/00, A61C 3/00

(54) **DEVICE TO ALLOW A CLEANING OF A NOZZLE OF A DENTAL TOOL AND A SYSTEM INCLUDING THE NOZZLE ELEMENT AND THE DEVICE**

(71) Applicant: Ferton Holding S.A., 2800 Delémont (CH)
(72) Inventor: PICHAT, Patrick, 2800 Delémont (CH); VANDEKERCKHOVE, Olivier, 2800 Delémont (CH); GATINEAU, Vincent, 2800 Delémont (CH)
(74) Representative: Müller Schupfner & Partner Patent- und Rechtsanwaltspartnerschaft mbB

(57) **Abstract**

A device (1) to allow a cleaning of a nozzle element (10) of a dental tool, wherein the nozzle element (10) ejects a powder-gas-mixture, being transported by a first channel (11) of the nozzle element (10), and a fluid, being transported by a second channel (12) of the nozzle element (10), wherein the nozzle element (10) is configured to eject the powder-gas-mixture and the fluid such that the ejected fluid surrounds the ejected powder-gas-mixture, the device (1) comprising:
- an interface section (22) configured to connect the device (1) to the nozzle element (10) of the dental tool and
- an entrance section (21) configured to introduce a cleaning medium into the device (1),
wherein the device (1) is configured to guide the cleaning medium into the first channel (11) and the second channel (12) of the nozzle element (10) to clean the first channel (11) and the second channel (12).

## Description

The present invention concerns a device to allow a support of cleaning a nozzle of a dental tool and a system including the nozzle element and the device.

Nozzle systems in powder blasting devices are well known from the state of the art, for example from US 3 882 638 A or EP 0 294 548 A1. Such nozzle systems are typically used for cleaning teeth, in particular for removing stains, tartar and colorations from teeth and for removing dental biofilms. In particular, the aim of using a powder blasting device is to clean dental surfaces and free them from stains, tartar, biofilms and colorations without harming the tooth surface underneath, which is enamel or dentine.

Such nozzle systems provide a powder-gas mixture stream being encased by a liquid stream. The outlet stream, formed by the powder-gas mixture encased by the liquid stream, is directed on the tooth surface and causes removing of stains, tartar, coloration and/or dental biofilms. The liquid stream, encasing the powder-gas mixture stream, is provided to trap generated dust and to avoid mist during operation of the powder blasting device.

DE 10 2013 108 295 A1 describes a method, which uses a device for introducing water into a proximal end of the channel, which transports the powder-gas-mixture, when the dental tool is operated. As a result it is possible to use the device of DE 10 2013 108 295 A1 to clean the channel, which transports the powder-gas-mixture. Said device is not configured for cleaning a channel transporting water, which is ejected such that it surrounds the ejected powder-gas-mixture. However, the water channel might have also some chemical residues, which can block the water channel.

For cleaning the channel, which transports the fluid, an ultrasound bath is usually used. However, this approach requires a lot of equipment and is very time consuming.

Considering the prior art, it was an object of the present invention to provide a device to allow the cleaning of a nozzle element of a dental tool.

This object is achieved by the device according to claim 1 and a system according to claim 15. Preferred embodiments are incorporated in the dependent claims, the description and the figures.

According to a first aspect of the present invention a device to allow or to support a cleaning of a nozzle element of a dental tool is provided, wherein the nozzle element ejects a powder-gas-mixture, being transported by a first channel of the nozzle element, and a fluid, being transported by a second channel of the nozzle element, wherein the nozzle element is configured to eject the powder-gas-mixture and the fluid such that the ejected fluid surrounds the ejected powder-gas-mixture, the device comprising:
- an interface section configured to connect the device to the nozzle element of the dental tool and
- an entrance section configured into introduce a cleaning medium, in particular a pressurized cleaning medium, to the device,
wherein the device is configured to guide the cleaning medium into the first channel and the second channel of the nozzle element to clean the first channel and the second channel.

Contrary to the approaches of the prior art, the present invention suggests to provide a device being suitable to supply the cleaning medium to both the first channel and the second channel of the nozzle element of the dental tool. Preferably, the dental tool is a powder blasting device, which provides a stream of a powder-gas-mixture, being surrounded by a curtain, which is formed by a fluid, in particular, liquid stream, such as a water stream. It turned out that the device to support or to allow the cleaning of the dental tool can be advantageously used to guide the cleaning medium inside both the first channel and the second channel of the nozzle element. As a result, it is no longer necessary to use an ultrasonic bath for removing residuals from the second channel, which is used to guide the fluid being ejected from the nozzle element to form the curtain, surrounding the ejected powder-gas-mixture. Preferably, the interface section and the entrance section respectively form a part of a transport channel, which guides the cleaning medium from the entrance section to the interface section. For forming the entrance section and the interface section, those sections need to be dimensioned and shaped such that a sealed connection is established between the device on the one hand and the nozzle element/ a means for providing a pressurized medium on the other hand. Particularly, the entrance section and the interface section distinguish from each other, especially in view of their dimension and/or shape. For example an opening in the entrance section has a different size as an opening in the interface section. Preferably the opening in the entrance section is greater than the opening in the interface section.

In particular, the device to allow the cleaning of a nozzle element is configured such that the first channel and the second channel can be cleaned simultaneously, i. e. at the same time. This makes sure that the second channel is cleaned each time, when the first channel is cleaned.

Furthermore, it is preferably provided that the device is configured to handle a fluid having a pressure between 0.6 bar and 2.4 bar, more preferably between 0.8 bar and 2 bar and most preferably between 1 bar and 1.6 bar. In other words, the device is configured such that the, in particular sealed, connection of the device to the nozzle element on the one hand and the means of providing the pressurized cleaning medium, in particular a syringe, on the other hand is maintained and the device is not disconnected from the nozzle element or the means for providing the pressurized cleaning medium, when the fluid enters the device. As a result, it is for exampled possible to use a standard 20 mL or 60 mL syringe for inserting a cleaning medium into the nozzle element via the device. Such a 20 mL syringe typically generates a pressure between 1.5 bar (normal) and 2.2 bar (maximum) or a 60 mL syringe usually generates a pressure between 0.9 bar (normal) and 1.2 bar (maximum).

As a result, it is possible to clean the second channel in a simple manner on a regular basis to avoid any kind of crystallization during a sterilization step. Otherwise a clogging of the second channels might occur, which comes generally from chemicals used during a reprocessing method. These chemicals, when not cleaned with pure water, will then otherwise crystallize during the sterilization step and create then hard deposits within the water channel.

In particular, it is provided that the interface section is configured to receive the nozzle element and to establish a sealed connection between the nozzle element on the one hand and the device on the other hand. The entrance section is configured to receive a means for providing a pressurized cleaning medium. For example, the means for providing the pressurized cleaning medium is a syringe, a standardized part of which at its front end can be inserted into the entrance section of the device. Thus, the device forms an adapter between the means for providing the pressurized cleaning medium and the nozzle element to be cleaned by using the pressurized cleaning medium.

Preferably, it is provided that the interface section is configured to create a frictional connection and/or a formfitting connection with a nozzle element. As a result, it is advantageously possible to attach the device by a simple attachment movement, preferably by using only a one hand. It is also conceivable that a kind of bayonet connection can be used to create the connection between the device and the nozzle element. Preferably, the interface section is configured for a pure frictional connection. In case of a pure frictional connection no further configurations at the nozzle element are necessary and the device can be used for a plurality of nozzle elements. Preferably, the device is connected to the nozzle element and/or the means for providing a pressurized cleaning medium by a plug-in mechanism.

Preferably, it is provided that the interface section is configured to surround a distal end of the nozzle element, when the device is attached to the distal end of nozzle element. Contrary to the approaches of the prior art, the device is configured such that it is attached to the distal end of the nozzle element and not to the proximal end. Further, the device can be simply pulled over the outlet region of the nozzle element, including the outlet of the first and the second nozzle element. As a result of attaching the device to the distal end of the nozzle element, it is advantageously possible to supply the cleaning medium directly to the region being more affected by residuals inside the first and second channel. Furthermore, by creating a connection, which surrounds the nozzle element, it is possible to reduce the probability of damaging the device, which could otherwise result in plastic chips blocking or clogging the nozzle element.

According to a preferred embodiment, it is provided that the device comprises a transport channel to transport the cleaning medium from the entrance section to the interface section. Preferably, the transport channel is formed by a recess or hole, which extends through the device. In particular, the transport channel extends straight, arched and/or angled. Furthermore, the interface section and the entrance section form the beginning front side and the end front side of the transport channel. The interface section corresponds to the part of the transport channel, which extends along a length being defined by the length of the part, which is inserted into the interface section, when the device is attached to the nozzle element. The entrance section corresponds to the part of the transport channel which extends over a length, which corresponds to the length of the part of the syringe being inserted into the entrance region, when the device is attached to the syringe. Preferably, the length of the part of the transport channel between the interface section and the entrance section is at least two times, preferably four times and most preferably six times greater than the length of the entrance section and/or interface section.

Preferably, it is provided that the transport channel tapers from the entrance section to the interface section. In particular, the transport channel forms a conically shaped recess and/or hole, which extends over the entire length of the device or at least about 70% of the entire length. Furthermore the tapering, in particular conically tapering, transport channel allows to reduce the volume and therefore to minimize the "dead" water volume between the syringe and the nozzle at the interface section on the one hand and to reduce a pressure drop on the other hand. It turned out that using a tapering channel represents a preferred way to establish an equilibrium between a minimized volume and a reduced pressure drop. Preferably, it is provided that the transport channel is defined by an inner side wall of the recess or hole extending through the device. In particular, it is provided that the inner side wall, which defines the transport channel of the device, is free of step-like courses. Thus, it is advantageously possible to avoid that vortexes are generated, when the cleaning medium is inserted into the device under pressure. Preferably, the inner side wall forms a continuously tapering hole.

In particular, it is provided that a single transport channel is configured to supply the cleaning medium to both the first channel and the second channel of the nozzle element. In such an embodiment it is possible to use a quite simple form of a conically shaped transport channel, for example, to supply the cleaning medium to both the first and the second channel. Thus, there is no individual supply for the first and second channel necessary and both channels, i. e. the first and the second channel, can use the device for supplying the cleaning medium to clean the first and the second channel.

In particular, the interface section and/or the entrance section comprises a conically shaped recess. Preferably, it is provided that the interface section and/or the entrance section are part of the transport channel, the part of the transport channel assigned to the interface section and/or the inner section being formed conically. The conically shaped inner side, especially of the entrance region, is used to receive the outlet of the means for providing pressurized cleaning medium, such as a syringe, and to create and to establish a sealed connection between the device for providing a pressurized cleaning medium on the one hand and the device on the other hand. Further, the conical shape of the interface section is of advantage, since it reduces the probability of damages at the device, which otherwise creates plastic chips blocking or clogging the nozzle element.

Preferably, it is provided that the device is at least section wise tube shaped, in particular it is also provided that the device mainly extends along a longitudinal direction and forms a straight tube, being made from a preferably elastically deformable material. It is also conceivable that in an alternative embodiment the device is formed at least section wise by a hose, which is flexible and does not automatically return into the original shape after it has been deformed.

Preferably, it is provided that the entrance section forms a female part of a connection mechanism to receive a front end part of a means to provide a pressurized fluid. Particularly, it is provided that the entrance section forms part of a Luer lock to receive a part of a syringe, in particular a front end of a syringe, being standardized. A Luer lock forms a standard interface connection between the syringe and, for example, needles being used for such a syringe. By adapting the shape of the entrance section, in particular the inner side wall of the transport channel, to said standardized shape, it is possible to use the adapter element in connection with each kind of syringe having all standardized dimensions. As a result, it is possible to insert a syringe at the entrance region and by using the syringe to press the cleaning medium into the device, which guides the pressurized cleaning medium via the transport channel and/or interface section into the first and the second channel of the nozzle element. Preferably, the entrance section, i. e. the inner side wall of the device forming the beginning of the transport channel, creates or establishes a female part of the Luer lock for receiving the front end of a syringe being standardized.

Preferably, it is provided that at least a part of the interface section is made from a material having a hardness of 40 to 100 shoreA. Preferably, the material has a hardness of about 50 and 95 shoreA and more preferably about 80 to 90 shoreA. It turned out that this material property allows to elastically deform the interface section such that different kinds of nozzle elements can be inserted into the interface section of the device. Thus, it is possible to take into account that some nozzle elements might have no complete or perfect circular cross section in a plane being perpendicular to transport direction, along which the powder-gas-mixture is transported inside the first channel, when operated. In particular, the device's material composition having said elasticity allows to create a sufficient frictional connection between the nozzle element and the device when the adapter element or the device is pulled over the nozzle element.

In particular, it is provided that the device is formed as a single piece component. In particular, the single piece component is made from one material. In particular, the skilled person understands by "a single piece component" a component, which cannot be subdivided into further subcomponents without destroying the component.

Preferably, it is provided that the device is configured such that the entrance section is stiffer than the interface section. As a result the interface section is soft enough to be tolerant to the geometrical imperfection of the nozzle element and the entrance section is stiff enough to introduce the pressurized fluid or liquid into the device. In other words: The interface section needs to be soft for the fitting of the nozzle element and the entrance region needs to be hard for the fitting with the syringe. This allows to easily insert the front end of the syringe into the entrance section. At the entrance section a deformation is not necessary, since the front ends of the syringe are standardized to create the Luer lock. At the entrance section a stiff material is of advantage, since it supports an easy handling and on the opposite end, i. e. at the interface section, it is of advantage to have a less stiff and more elastically deformable section, which can be adapted to different and non-standardized shapes of the nozzle elements and their outer shape. Furthermore, the entrance region is configured such stiff that it is able to transmit the pressure energy without deformation.

Preferably, it is provided that the entrance section is formed by a wall having a first wall thickness and the interface sections is formed by a wall having a second wall thickness, wherein the first wall thickness distinguishes from the second wall thickness. Preferably, the second wall thickness is smaller than the first wall thickness. By adapting the wall thicknesses, it is advantageously possible to adjust or adapt the elasticity of the entrance section and the interface section respectively. This especially allows to use the same material for the device on the one hand and to create different grades of stiffness at the entrance section and the interface section.

In particular, the first wall thickness is between 0.5 mm and 7 mm, preferably between 1 mm and 4 mm and most preferably between 1 and 3 mm. Particularly, the second wall thickness is between 0.1 mm and 1.5 mm, preferably between 0.2 mm and 1.2 mm and most preferably between 0.3 and 1 mm. It is also conceivable that the first wall thickness and/or the second wall thickness is smaller than a third wall thickness being assigned to the part of the transport channel, being arranged between the entrance section and the interface section. As a result a fitting can be guaranteed or at least improved.

Preferably, it is provided that the device is at least partially formed by a thermoplastic elastomer, such as PET, PP, PE. It turned out that the thermoplastic elastomers can be easily handled during the manufacturing on the one hand and on the other hand the material provides the elasticity, being desired for the entrance section and the interface section to create the desired different grades of stiffness.

Preferably, it is provided that the device has a mainly circular outlet shape, preferably having a mainly constant cross section outside the interface section. The interface section is preferably formed by a collar like element, which protrudes at the front end of the device being opposite to the entrance region.

Preferably, the fluid and/or the cleaning medium is water and/or aseptic water.

Another aspect of the present invention addresses a system comprising a nozzle element of a dental tool and a device according to the present invention. All specifications and benefits being discussed in context of the device apply analogously to the system of the device and the nozzle element. In particular, it is provided that in one preferred embodiment the nozzle element and the device are adapted to each other for forming a sealed connection between the device and the nozzle element when the nozzle element is inserted into the device.

In the drawings:
- Fig. 1: schematically shows a device to allow a cleaning of a nozzle element according to a preferred embodiment of the present invention in a side view (top) and a cross sectional view (bottom) and
- Fig.2: schematically shows the device to allow the cleaning of a nozzle element of figure 1 attached to a nozzle element in a side view (top) and a cross sectional view (bottom),

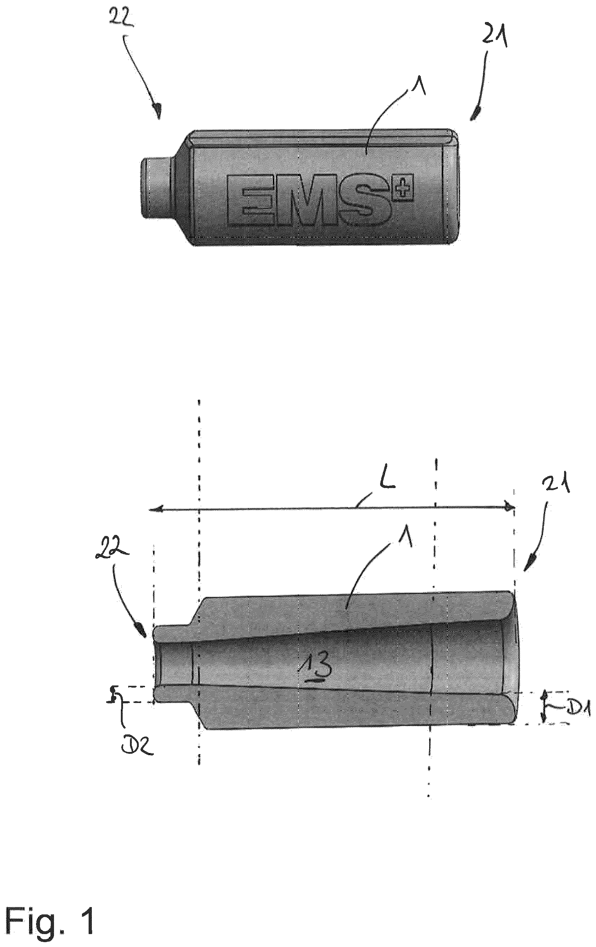

In **figure 1** a device 1 to allow a cleaning of a nozzle element 10 according to a preferred embodiment of the present invention is illustrated in a side view (top) and a cross-sectional view (bottom). In particular, the device 1 to support or to allow cleaning the nozzle element 10 is intended to support of to allow the cleaning of a nozzle element 10 of a powder blasting device, which ejects a powder-gas-mixture for removing stains, tartar, coloration and/or dental biofilms from a surface of teeth. Such a powder blasting device or powder jet device usually ejects a fluid stream, in addition to the powder-gas-mixture, the fluid stream surrounding the ejected powder-gas-mixture to form a kind of curtain. As a result, it is possible to reduce the dust formation, when the abrasive particles of the powder-gas-mixture hit the surface of the tooth.

For ejecting a powder-gas-mixture being surrounded by a fluid stream, the nozzle element 10 comprises a first channel 11 to transport the powder-gas-mixture and a second channel 12, which surrounds the first channel 11, to guide the fluid until it is ejected from the nozzle element 10. Preferably, the second channel 12 completely surrounds the first channel 11, and the first channel 11 and the second channel 12 are arranged concentrically to each other. Preferably, a cross section of the second channel 12 has a ring - like shape in a plane being perpendicular to the transport direction of both the transported powder-gas-mixture and the fluid. Preferably, the second channel 12 forms a slit-like ring at the outlet of the nozzle element 10 for forming a non-spreading and thin curtain of the fluid.

The device 1 to support or to allow the cleaning of a nozzle element 10 of a dental tool is in particular intended to form an adapter between the nozzle element 10 and a syringe. In other words: The device is configured such that it is suitable to receive a cleaning medium, preferably water, and guide this cleaning medium into the nozzle element 10. In particular, it is provided that the device 1 is configured to guide the cleaning medium into the first channel 11 and the second channel 12 of the nozzle element 10 to clean the first channel 11 and the second channel 12. As a result, it is possible to use the device 1 for cleaning both the first channel 11 and the second channel 12. For this purpose the device 1 comprises an interface section 22 configured to connect the device 1 to the nozzle element 10 of the dental tool and an entrance section 21 configured to introduce a cleaning medium to the device 1. In the embodiment of figure 1, the device 1 is tube shaped and the interface section 22 and the entrance section 21 are arranged at opposite ends of the tube. However, it is also conceivable that the device 1 is formed by a flexible hose or a component having an arched or angled course. In the embodiment of figure 1 the device 1 is configured as a straight extending tube.

Preferably, the device 1 comprises a transport channel 13, which guides the cleaning medium from the front side of the entrance section 21 to the front side of the interface section 22. In the embodiment illustrated in figure 1, the transport channel 13 tapers from the entrance section 21 to the interface section 22. In particular, the inner side of the preferably conically-shaped hole inside the device 1 forming the transport channel 13, is free of steps or step-like courses. Preferably, the inner side continuously tapers from the front side of the entrance section 21 to the front side of the interface section 22. Preferably, it is provided that the distance between the front side of the entrance section 21 and the front side of the interface section 22 has a length having a value between 4 to 10 cm. Furthermore, it is provided that the device 1 is formed as a single-piece component. A single-piece component is understood as a component, which cannot be divided into subcomponents without destroying the device 1. For example, the device 1 is formed by one material. Preferably, the material of the device 1 is a thermoplastic elastomer. In particular, the material has a hardness between 40 to 100 shoreA, more preferably between 80 and 90 shoreA. This specification of the material allows the configuration of the wall thicknesses at the entrance section 21 and the interface section 22 to adapt their elasticity. This is especially of advantage, since the cross sections of the nozzle elements 10 being inserted into the interface section 22 of the device differ for different dental tools. In particular, these inserted parts of the nozzle elements 10 might have an oval or non-circular cross section such that a certain amount of deformation, especially an elastic deformation is necessary to create a sufficient and sealing connection between the interface section 22 of the device 1 and the nozzle element 10. Preferably, it is provided that the wall forming the entrance section 21 has a first wall thickness D1, while the wall forming the interface section 22 has a second wall thickness D2. In particular, the first wall thickness D1 distinguishes from the second wall thickness D2. In particular, the second wall thickness D2 is smaller than the first wall thickness D1. This for example allows to provide a more elastic wall in the interface section 22 compared to the wall of the entrance section.

Preferably, a ratio of a second wall thickness D2 to the first wall thickness D1 is smaller than 0.7, preferably smaller than 0.6 and more preferably smaller than 0.5.

The transport channel 13 in the device 1 is formed by a conically shaped recess or hole being established inside the device 1. Preferably, the transport channel 13 mainly extends concentrically to the outer side of the device 1.

Furthermore, the entrance section 21 and the interface section 22 are part of the transport channel 13. In other words, a conical course of the hole in the entrance section 21 is continued for forming the transport channel 13 and the transport channel 13 continues the conical course until the interface section 22.

In particular, it is provided that the interface section 22 forms the part of the device 1, which extends from a front side of the interface section 22 to a front side of the syringe, when it is inserted into the device 1 completely. In particular, the entrance section 21, in particular the inner side of the recesses or hole forms a part of a Luer lock to receive a tip of a syringe. In particular, the inner side of the recess in the device 1, in particular in the entrance section 21, is configured such that it forms the female part of the Luer lock. In other words: the conically shaped hole inside is adapted to the standardized size of the outlet tubes or front end of the syringe, such that the device 1 can easily be pulled over the tip of the syringe and water can be pressed into the device 1 by forming a sealed connection between the syringe and the device 1.

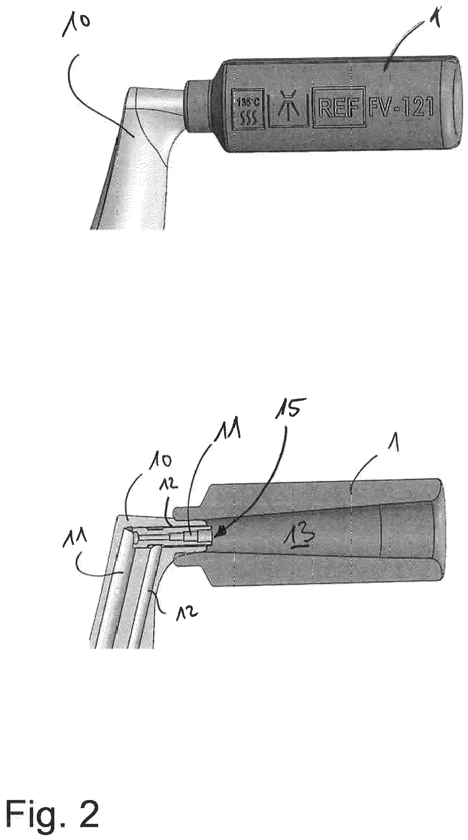

In **figure 2** the device 1 of figure 1 is illustrated in a side view (top) and a sectional view (bottom) when the device 1 is attached to the nozzle element 10. The connection between the nozzle element 10 and the device 1 is established by the interface section 22. The interface section 22 is configured to supply the first channel 11 and the second channel 12 with a cleaning medium. In particular, it is provided that the device 1 is configured to be attached to the distal end 15 of the nozzle element 10. In particular, the interface section 22 also forms a female part of a connection mechanism and it receives the nozzle element 10 inside the device 1. In particular, the device 1 has a collar-like element wherein the collar-like element protrudes from the device 1 along a direction, being parallel to the transport direction along which the cleaning medium is transported through the device 1. The nozzle element 10 of the dental tool is inserted into the inside of the interface section being 22 mainly formed by the collar element. As a result, it is possible to surround the nozzle element 10 and to supply the cleaning medium to the outlet of both the first channel 11 and second channel 12. In particular, it is provided that the interface section 22 is configured to create a form-fitting and/or a frictional connection with a nozzle element 10. Thus, it is for example possible to attach the device 1 to the nozzle element 10 by using only one hand which pulled the device 1 on the nozzle element 10. Furthermore, the device 1 is configured such that one single transport channel 13 supplies cleaning medium to the first channel 11 and the second channel 12, wherein the cleaning medium preferably enters for the cleaning the first channel 11 and the second channel 12 at their outlets, which are usually used to eject the powder-gas-mixture and the fluid, when the nozzle element 10 is operated. The interface section 22 extends along the transport direction about a length, which corresponds to the inserted part of the nozzle element 10, which is inserted into the device 1 at the interface section 22.

### Reference numerals:

- 1: device
- 10: nozzle element
- 11: first channel
- 12: second channel
- 13: transport channel
- 15: distal end
- 21: entrance section
- 22: interface section
- D1: first wall thickness
- D2: second wall thickness

## Claims

1. A device (1) to allow a cleaning of a nozzle element (10) of a dental tool,
wherein the nozzle element (10) ejects a powder-gas-mixture, being transported by a first channel (11) of the nozzle element (10), and a fluid, being transported by a second channel (12) of the nozzle element (10), wherein the nozzle element (10) is configured to eject the powder-gas-mixture and the fluid such that the ejected fluid surrounds the ejected powder-gas-mixture, the device (1) comprising:
- an interface section (22) configured to connect the device (1) into the nozzle element (10) of the dental tool and
- an entrance section (21) configured to introduce a cleaning medium to the device (1),
wherein the device (1) is configured to guide the cleaning medium into the first channel (11) and the second channel (12) of the nozzle element (10) to clean the first channel (11) and the second channel (12).

2. The device (1) according claim 1, wherein the interface section (22) is configured to surround a distal end (15) of the nozzle element (10), when the device (1) is attached to the nozzle element (10).

3. The device (1) according to one of the preceding claims, wherein the interface section (22) is configured to create a frictional connection and/or a form-fitting connection with the nozzle element (10).

4. The device (1) according to one of the preceding claims, wherein the device (1) comprises a transport channel (13) to transport the cleaning medium from the entrance section (21) to the interface section (22).

5. The device (1) according to claim 4, wherein the transport channel (13) tapers from the entrance section (21) to the interface section (22).

6. The device (1) according one of the preceding claims, wherein device (1) is configured to be connected to the nozzle element (10) and/or a means for providing a pressurized cleaning medium by a plug-in mechanism.

7. The device (1) according to one of the preceding claims, wherein the interface section (22) and/or the entrance section (21) comprises a conically shaped recess.

8. The device (1) according to one of the preceding claims, wherein the entrance section (21) includes a part of a Luer lock to receive a syringe or is configured to receive an outlet of a means for providing a pressurized cleaning medium.

9. The device (1) according to one of the preceding claims, wherein at least a part of the interface section (22) is made from a material having a hardness of 40 to 100 ShoreA.

10. The device (1) according to one of the preceding claims, wherein the device is configured such that the entrance section (21) is stiffer than the interface section (22).

11. The device (1) according to one of the preceding claims, wherein the entrance section (21) is formed by a wall having a first wall thickness (D1) and the interface section (22) is formed by a wall having a second wall thickness (22), wherein the first wall thickness (D1) distinguishes from the second wall thickness (D2).

12. The device (1) according to claim 11, wherein the first wall thickness (D1) is between 0.5 mm and 7 mm and the second wall thickness (D2) is between 0.1 mm and 1.5 mm.

13. The device (1) according to one of the preceding claims, wherein the device (1) is at least sections wise tube shaped.

14. The device (1) according to one of the preceding claims, wherein the device (1) is at least partially formed by a thermoplastic elastomer.

15. A system comprising a nozzle element (10) of a dental tool and a device (1) according to one of the preceding claims.
